# EUROPEAN PATENT SPECIFICATION

(11) **EP 3 608 160 B1**
(45) Date of publication and mention of the grant of the patent: **29.09.2021**
(21) Application number: 18306081.3
(22) Date of filing: 06.08.2018
(51) Int. Cl.: B60M 1/23, H02G 7/05

(54) **CLAMP FOR DROPPER FOR RAILROAD LINES**
KLEMME FÜR HÄNGER FÜR EISENBAHNLINIEN
PINCE DE CAVALIER POUR LIGNES DE CHEMIN DE FER

(43) Date of publication of application: 12.02.2020
(73) Proprietor: ALSTOM Transport Technologies, 93400 Saint-Ouen (FR)
(72) Inventor: FORMENTI, Leonardo, 23891 Barzano (IT); FLENA, Daniele, 23843 Dolzago (IT)
(74) Representative: Lavoix

(56) References cited:
- FR-A- 715 993
- GB-A- 293 213
- US-A- 4 407 471
- US-A- 4 504 034

## Description

The present invention relates to a clamp for dropper for railroad lines.

An overhead line or overhead wire is commonly used to transmit electrical energy to trams or trains. Electric trains that collect their current from overhead lines use a device such as a pantograph or trolley pole which presses against the underside of the lowest overhead wire, the contact wire.

It is known that in railroad lines the contact wire for the pantographs of electric locomotives is suspended from a support and electric power supply cable, which is arranged like a catenary curve, by means of elements commonly known as droppers. These elements are generally constituted by a clamp, to be engaged with the support and electric power supply cable or messenger wire, and by another clamp, to be engaged with the contact wire; said clamps are connected one another by a flexible dropper connection wire, which also provides the electrical connection between the two clamps. The document US 4 504 034 A shows such a railroad line installation.

Nowadays, several different types of clamps are available on the market. Clamps with one or two crews are widely used to lock the contact wire or the messenger wire, but the process of tightening the screws is long and it requires around the 50% of the dropper installation time.

Other types of clamps without screws are used, but they are composed by two separated elements. The presence of more than one element increases the possibility to lose a component during the transportation or installation phase. In addition, due to the fact that the installation is done at about five meter of height, the recovery of the component could be a loss of time, and it could lead to an injury to people on the ground.

Other different types of clamps are known, respectively:
- clamps which does not require screws to be connected to the dropper, but which comprises more than one component;
- clamps obtained by single metallic sheet, cut and bent, but including a screw to lock the wire into the clamp;
- clamps similar to a clothespin, with an elastic element, and comprising more than one component;
- clamps associated with a system to regulate the length of the dropper connection wire that require to implement a crimping process, or having screws to fix the length of the dropper connection wire.

The main disadvantage of all these clamps is that they either require multiple components or require screws, thus facilitating the possibility of losing components during the transportation to the site where the dropper has to be assembled, or making the installation phases complex.

It is therefore an object of the present invention to provide a clamp for dropper for railroad lines which does not require screws for its assembly and which does not comprise multiple components, thus overcoming the limitations of the prior art solutions.

This and other objects are fully achieved by virtue of a clamp for dropper for railroad lines having the characteristics defined in independent claim 1.

Thanks to the fact of having a single main body with a tightening part for tightening the dropper connection wire, the clamp of the present invention comprises a single and unique element instead two or more components, and does not require screws for regulating the length of the dropper connection wire.

Preferred embodiments of the invention are specified in the dependent claims, whose subject-matter is to be understood as forming an integral part of the present description.

Further characteristics and advantages of the present invention will become apparent from the following description, provided merely by way of a non-limiting example, with reference to the enclosed drawings, in which:
- Figure 1 shows a perspective view of an overhead line having droppers;
- Figure 2 shows a perspective view of a clamp according to the present invention; and
- Figure 3 shows a transversal view of the clamp of Figure 2.

Briefly, a dropper for a railroad line provided with a clamp of the present invention basically comprises a first clamp for the messenger wire, a second clamp for the contact wire and a dropper connection wire that links the two clamps. The dropper has to guarantee the electrical conductivity between the messenger wire and the contact wire and it is necessary to maintain the contact wire horizontal as much as possible. The length of the dropper changes along the span of the railway catenary to guarantee the planarity of the contact wire.

The clamp of the present invention has a mono-block design and does not use screws to lock the dropper connection wire so that the installation time is reduced and the cost of screws washers, nuts and the machining of the fillets are removed.

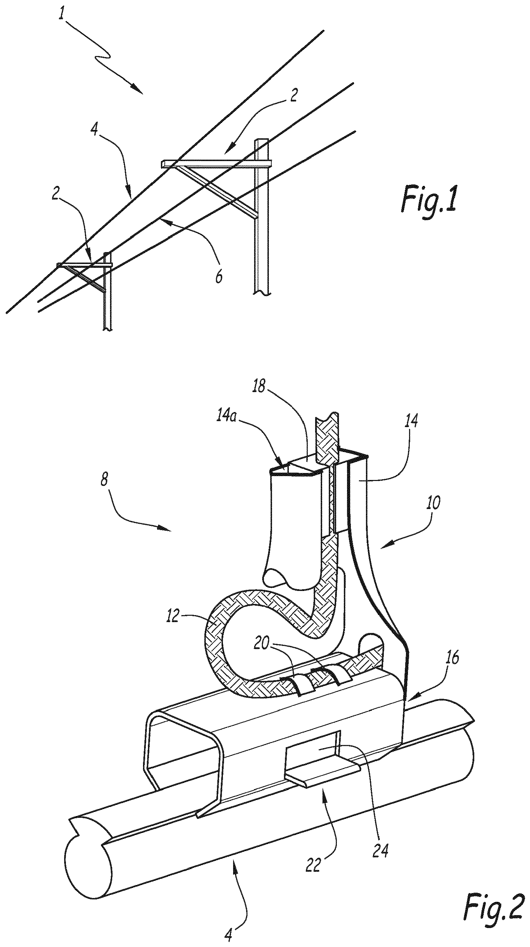

Figure 1 shows a perspective view of a railroad overhead line 1 wherein two droppers 2, placed a respective distance of 4 - 5 meters, link a messenger wire 4 to a contact wire 6 and maintain the contact wire 6 in a horizontal position.

Each dropper 2 comprises two clamps, for engaging respectively with the messenger wire 4 the contact wire 6, made up of one single body, which uses the elasticity of the body itself to guarantee a pressure on the wire to avoid the relative movements between the clamp and the wire. The mono-block design of the clamps allows to avoids loses of components during the transportation and installation phases.

Figure 2 shows a perspective view of a clamp 8 of the present invention. The clamp 8 comprises a main body 10 to hold a dropper connection cable 12 arranged to extend between the messenger wire 4 and the contact wire 6 to provide an electrical connection between the two clamps 8 of the dropper 2.

The shape of the dropper connection cable 12 permits to regulate the link length between the messenger wire 4 and the contact wire 6.

The main body 10 comprises an elongated vertical part 14 connected to a horizontal part 16. The vertical part 14 has a passing hole 14a through which the dropper connection cable 12 slides. A tightening part 18 is fixed inside the elongated vertical part 14, in the passing hole 14a, so as to face the dropper connection cable 12, said tightening part 18 being arranged to regulate the length of the dropper connection cable 12 by tightening the dropper connection cable 12 ad different positions when the dropper connection cable 12 slides in the tightening part 18.

The tightening part 18 operates as a self-locking wedge to tighten the dropper connection cable 12 at a desired length, thus allowing avoiding the use of a screwdriver or other similar tools.

Preferably, the tightening part 18 is placed on top of the dropper 2.

The regulation of the length of the dropper connection cable 12 can be done either on the installation site or in the warehouse. The main advantage is that it is possible to correct the length of the dropper connection cable 12 without removing or substituting the dropper 2.

The clamp 8 further comprises at least one fixing element 20, placed in an upper side of the horizontal part 16, to permanently fix the dropper connection cable 12 to the clamp 8 itself.

On the lateral part of the horizontal part 16 there is a flap 22 with an hole 24 arranged to open and close the clamp 8, in particular to enlarge the passing hole 14a that hosts the dropper connection cable 12. A predefined tool per se known and not shown in the figure, like a pliers, is used to engage the flap 22. Thanks to the presence of this flap 22 it is possible to avoid the theft of the copper of the dropper connection cable 12 during the installation of the overhead line 1. In addition, the correction of the position of the dropper connection cable or the maintenance of the dropper 2 is also simplified, while the installation time is reduced by around 50%.

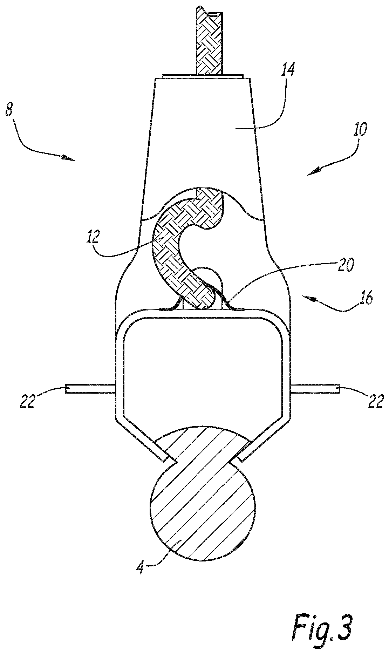

Figure 3 is a transversal view of the clamp 8 of figure 2, wherein the same elements have been indicated with the same reference numbers.

The clamp 8 can be made of copper, brass, or other materials (i.e. fiberglass), suitable for reducing the costs while maintaining at the same time an analogous electrical resistance and corrosion resistance.

Clearly, the principle of the invention remaining the same, the embodiments and the details of production can be varied considerably from what has been described and illustrated purely by way of non-limiting example, without departing from the scope of protection of the present invention as defined by the attached claims.

## Claims

1. A clamp (8) for dropper (2) for railroad line (1) comprising:
- a main body (10) to hold a dropper connection cable (12) arranged to extend between a messenger wire (4) and a contact wire (6) of the railroad line (1), wherein the main body (10) comprises an elongated vertical part (14) having a passing hole (14a) through which the dropper connection cable (12) slides; and
- a tightening part (18), fixed inside the elongated upper part (14) in the passing hole (14a), so as to face the dropper connection cable (12), said tightening part (18) being arranged to operate as a self-locking wedge to tighten the dropper connection cable (12) at a predetermined length when the dropper connection cable (12) slides in the tightening part (18),
the clamp being **characterized in that** it further comprises a horizontal part (16) connected to the vertical part (14) and at least one fixing element (20), placed in an upper side of said horizontal part (16), to permanently fix the dropper connection cable (12) to the clamp (8) itself.

2. The clamp (8) of claim 1, wherein the tightening part (18) is placed on top of the dropper (2).

3. The clamp (8) of any of the preceding claims, further comprising a flap (22), placed on a lateral part of the horizontal part (16), said flap (22) having a hole (24) through which the passing hole (14a) is enlarged, thus allowing opening of the clamp (8).

4. The clamp (8) of any of the preceding claims, wherein the clamp (8) is made of copper or brass.

## Patentansprüche

1. Klemme (8) für einen Hänger (2) für eine Eisenbahnleitung (1), welche aufweist:
- einen Hauptkörper (10), um ein Hänger-Verbindung-Kabel (12) zu halten, welches angeordnet ist, um sich zwischen einer Tragleitung (4) und einer Fahrleitung (6) der Eisenbahnleitung (1) zu erstrecken, wobei der Hauptkörper (10) einen langgestreckten vertikalen Teil (14) aufweist, welcher ein Durchgangsloch (14a) hat, durch welches das Hänger-Verbindung-Kabel (12) rutscht, und
- einen Festziehen-Teil (18), welcher innerhalb des langgestreckten oberen Teils (14) in dem Durchgangsloch (14a) befestigt ist, um dem Hänger-Verbindung-Kabel (12) zugewandt zu sein, wobei der besagte Festziehen-Teil (18) angeordnet ist, um als ein selbstverriegelnder Keil zu arbeiten, um das Hänger-Verbindung-Kabel (12) bei einer vorbestimmten Länge festzuziehen, wenn das Hänger-Verbindung-Kabel (12) in dem Festziehen-Teil (18) rutscht,
wobei die Klemme **dadurch gekennzeichnet ist, dass** sie ferner aufweist einen horizontalen Teil (16), welcher mit dem vertikalen Teil (14) verbunden ist, und zumindest ein Befestigungselement (20), welches in einer oberen Seite des besagten horizontalen Teils (16) angeordnet ist, um das Hänger-Verbindung-Kabel (12) an der Klemme (8) selbst permanent zu befestigen.

2. Klemme (8) gemäß Anspruch 1, wobei der Festziehen-Teil (18) auf dem Hänger (2) angeordnet ist.

3. Klemme (8) gemäß irgendeinem der vorherigen Ansprüche, welche ferner eine Lasche (22) aufweist, welche an einem lateralen Teil des horizontalen Teils (16) angeordnet ist, wobei die besagte Lasche (22) ein Loch (24) hat, durch welches das Durchgangsloch (14a) vergrößert wird, was dadurch das Öffnen der Klemme (8) erlaubt.

4. Klemme (8) gemäß irgendeinem der vorherigen Ansprüche, wobei die Klemme (8) aus Kupfer oder Messing hergestellt ist.

## Revendications

1. Pince (8) pour cavalier (2) pour ligne de chemin de fer (1) comprenant :
un corps principal (10) pour maintenir un câble de connexion de cavalier (12) agencé pour s'étendre entre un câble porteur (4) et un câble de contact (6) de la ligne de chemin de fer (1), dans laquelle le corps principal (10) comprend une partie verticale allongée (14) ayant un trou passant (14a) à travers lequel coulisse le câble de connexion de cavalier (12) ; et
une partie de serrage (18) fixée à l'intérieur de la partie supérieure allongée (14) dans le trou passant (14a) afin de faire face au câble de connexion de cavalier (12), ladite partie de serrage (18) étant agencée pour servir de cale d'auto-verrouillage afin de serrer le câble de connexion de cavalier (12) à une longueur prédéterminée lorsque le câble de connexion de cavalier (12) coulisse dans la partie de serrage (18),
la pince étant **caractérisée en ce qu'**elle comprend en outre une partie horizontale (16) raccordée à la partie verticale (14) et au moins un élément de fixation (20) placé dans un côté supérieur de ladite partie horizontale (16), afin de fixer, de manière permanente, le câble de connexion de cavalier (12) à la pince (8) elle-même.

2. Pince (8) selon la revendication 1, dans laquelle la partie de serrage (18) est placée sur le dessus du cavalier (2).

3. Pince (8) selon l'une quelconque des revendications précédentes, comprenant en outre un rabat (22) placé sur la partie latérale de la partie horizontale (16), ledit rabat (22) ayant un trou (24) à travers lequel le trou passant (14a) est agrandi, permettant ainsi l'ouverture de la pince (8).

4. Pince (8) selon l'une quelconque des revendications précédentes, dans laquelle la pince (8) est réalisée à partir de cuivre ou de laiton.
